(19) Europäisches Patentamt
European Patent Office
Office européen des brevets

(11) EP 4 564 507 A1

(12) EUROPEAN PATENT APPLICATION
published in accordance with Art. 153(4) EPC

(43) Date of publication:
**04.06.2025 Bulletin 2025/23**

(21) Application number: **23877733.8**

(22) Date of filing: **13.10.2023**

(51) International Patent Classification (IPC):
***H01M 10/056*** *(2010.01)* ***H01M 10/052*** *(2010.01)*
***C08G 65/24*** *(2006.01)* ***C08L 71/02*** *(2006.01)*
***C08K 3/013*** *(2018.01)* ***C08K 3/22*** *(2006.01)*
***C08K 3/32*** *(2006.01)* ***C08K 3/34*** *(2006.01)*
***C08J 3/24*** *(2006.01)* ***C08J 5/22*** *(2006.01)*

(52) Cooperative Patent Classification (CPC):
**C08G 65/24; C08J 3/24; C08J 5/22; C08K 3/013; C08K 3/22; C08K 3/32; C08K 3/34; C08L 71/02; H01M 10/052; H01M 10/056**

(86) International application number:
**PCT/KR2023/015794**

(87) International publication number:
**WO 2024/080810 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.10.2022 KR 20220132767**
**12.10.2023 KR 20230136065**

(71) Applicant: **LG Energy Solution, Ltd.**
**Seoul 07335 (KR)**

(72) Inventors:
- **NAM, Sung Hyun**
  **Daejeon 34122 (KR)**
- **HAN, Hyea Eun**
  **Daejeon 34122 (KR)**
- **KIM, Dong Kyu**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) COMPOSITE SOLID ELECTROLYTE AND PREPARATION METHOD THEREFOR

(57) The present disclosure relates to a composite solid electrolyte and a method for preparing the same. The composite solid electrolyte comprises a polymer containing a PEO(polyethylene oxide)-based copolymer containing a crosslinkable functional group; and a ceramic compound, wherein at least a part of the crosslinkable functional group forms a crosslinking bond with each other, so that the polymer forms a three-dimensional network structure, and wherein the ceramic compound is contained in the three-dimensional network structure.



Processed by Luminess, 75001 PARIS (FR)

## Description

## [TECHNICAL FIELD]

Cross Citation with Related Application(s)

This application claims the benefit of Korean Patent Application No. 10-2022-0132767 filed on October 14, 2022 and Korean Patent Application No. 10-2023-0136065 filed on October 12, 2023 in the Korean Intellectual Property Office, the disclosures of which are incorporated herein by reference in their entirety.

The present disclosure relates to a composite solid electrolyte and a method for preparing the same.

## [BACKGROUND]

A lithium ion battery using a liquid electrolyte has a structure in which a negative electrode and a positive electrode are defined by a separator, and thus may cause a short-circuit when the separator is damaged by deformation or external impact, resulting in a risk, such as overheating or explosion. Therefore, it can be said that development of a solid electrolyte capable of ensuring safety is a very important issue in the field of lithium ion secondary batteries.

A lithium secondary battery using a solid electrolyte is advantageous in that it is enhanced in safety, prevents leakage of an electrolyte to improve the reliability of a battery, and facilitates manufacture of a thin battery. **In** addition, lithium metal can be used as a negative electrode to improve energy density, and therefore, it has been expected to be applied to a high-capacity secondary battery for electric vehicles in addition to a compact secondary battery, and thus has been spotlighted as a next-generation battery.

Among solid electrolytes, a polymer solid electrolyte can include an ion-conducting polymer material, and can be used in the form of a composite solid electrolyte in which such a polymer material is mixed with an inorganic material.

Such a conventional hybrid (composite) solid electrolyte is prepared by dispersing an inorganic powder such as oxide ceramics in a polymer matrix, and has the advantage of having higher ignition and combustion stability than existing liquid electrolytes and having higher ionic conductivity than polymer solid electrolytes, but has the difficulty in fulfilling the basic prerequisites, such as improving the dispersibility of oxide-based ceramic particles within the polymer matrix and optimizing the physical properties of the polymer matrix used. In particular, when a highly crystalline polymer such as polyethylene oxide (PEO) is used as a matrix, there was a problem that it was difficult to prepare a composite solid electrolyte with improved ionic conductivity. In other words, the high crystallinity of the PEO polymer impedes the chain mobility of the polymer chain, and thus, the movement of lithium ions within the composite solid electrolyte is limited, which made it difficult to improve the ionic conductivity of the composite solid electrolyte.

In order to overcome the limitations of the conventional composite solid electrolyte, attempts have been made to modify the structure of the crystalline polymer or add a separate plasticizer to the polymer to improve the mobility of the polymer chain and thus enhance the ionic conductivity of the composite solid electrolyte. However, it was difficult to improve the ionic conductivity of the composite solid electrolyte simply by a method of modifying the structure of the polymer or adding a plasticizer.

Therefore, there is a need to develop a technology that can improve the ionic conductivity of the composite solid electrolyte by a method other than modifying the structure of the polymer or adding a plasticizer.

[Prior Art Literature]

[Patent Literature]

(Patent Literature 1) Japanese Unexamined Patent Publication No. 1994-124713

## [DETAILED DESCRIPTION OF THE INVENTION]

### [Technical Problem]

It is an object of the present disclosure to provide a composite solid electrolyte that improves both mechanical strength and ionic conductivity by uniformly dispersing a ceramic compound in a prescribed crosslinked polymer structure, and a method for preparing the same.

It is another object of the present disclosure to provide an all-solid-state battery comprising a composite solid electrolyte improved in mechanical strength and ionic conductivity simultaneously.

**[Technical Solution]**

According to one embodiment of the present disclosure, there is provided a composite solid electrolyte comprising: a polymer containing a PEO(polyethylene oxide)-based copolymer containing a crosslinkable functional group; and a ceramic compound, wherein at least a part of the crosslinkable functional group forms a crosslinking bond with each other, so that the polymer forms a three-dimensional network structure, and wherein the ceramic compound is contained in the three-dimensional network structure.

The composite solid electrolyte may further comprise a crosslinking agent, and at least a part of the crosslinkable functional group of the PEO-based copolymer may form a crosslinking bond with each other through the crosslinking agent.

Further, the crosslinkable functional group is bonded through an alkylene linker or alkylene oxide linker having 0 to 10 carbon atoms (provided that an alkylene linker having 0 carbon atoms represents a single bond) to the PEO-based copolymer, and may be at least one functional group selected from the group consisting of a hydroxyl group, a carboxyl group, an isocyanate group, a nitro group, a cyano group, an amine group, an amide group, an epoxy group and an allyl group.

Meanwhile, the composite solid electrolyte of on embodiment may further comprise a lithium salt dispersed on the polymer forming the three-dimensional network structure. Such a lithium salt may be included in cationic and anionic states in which at least a part thereof are dissociated. The cations and/or anions may exist in a state bonded onto the polymer chain, and may move during charge/discharge of the battery.

In a specific embodiment, the PEO (polyethylene oxide)-based copolymer may be a copolymer containing repeating units of the following Chemical Formulas 1 to 3:

[Chemical Formula 1]

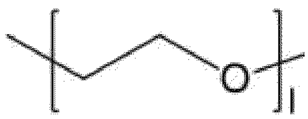

[Chemical Formula 2]

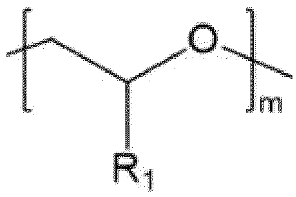

[Chemical Formula 3]

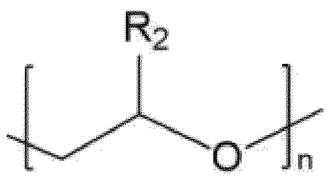

wherein, in Chemical Formulas 1 to 3, $R_1$ represents $-CH_2-O-(CH_2-CH_2-O)_k-R_3$, where k is 0 to 20, and $R_3$ represents an alkyl group having 1 to 5 carbon atoms,

$R_2$ represents a substituent in which one or more crosslinkable functional groups selected from the group consisting of a hydroxyl group, a carboxyl group, an isocyanate group, a nitro group, a cyano group, an amine group, an amide group, an epoxy group and an allyl group are bonded to a polymer chain via an alkylene linker or alkylene oxide linker having 0 to 10 carbon atoms (provided that an alkylene linker having 0 carbon atoms represents a single bond), and
l, m and n are the number of repetitions of the repeating unit, wherein l and n are each independently an integer of 1 to 1000, and m is an integer of 0 to 1000.

Further, in the composite solid electrolyte of one embodiment, the ceramic compound may include an oxide-based solid electrolyte selected from lithium metal oxide or lithium metal phosphate, and more specifically, may include at least one oxide-based solid electrolyte selected from the group consisting of lithium-lanthanum-zirconium oxide(LLZO)-based compound, lithium-silicon-titanium phosphate(LSTP)-based compound, lithium-lanthanum-titanium oxide(LLTO)-based compound, lithium-aluminum-titanium phosphate(LATP)-based compound, lithium-aluminum-germanium phosphate(LAGP)-based compound, and lithium-lanthanum-zirconium-titanium oxide (LLZTO)-based compound.

Meanwhile, according to another embodiment of the present disclosure, there is provided a method for preparing the composite solid electrolyte of one embodiment, the method comprising the steps of: forming a mixture of a polyethylene oxide(PEO)-based copolymer containing a crosslinkable functional group and a ceramic compound; and subjecting the PEO-based copolymer contained in the mixture to crosslinking reaction.

In the preparation method, the crosslinking reaction may be carried out in the presence of at least one additive selected from the group consisting of a crosslinking agent and an initiator.

According to yet another embodiment of the present disclosure, there is provided an all-solid-state battery comprising an electrolyte layer containing the composite solid electrolyte of one embodiment.

**[Advantageous Effects]**

The composite solid electrolyte according to the present disclosure can maintain the intrinsic structural properties of the polymer without deforming or breaking the polymer chain, and the ceramic compound is uniformly dispersed within the composite solid electrolyte, thereby exhibiting improved mechanical properties and ionic conductivity.

**[DETAILED DESCRIPTION OF THE EMBODIMENTS]**

Hereinafter, specific embodiments will be described in more detail for a better understanding of the present disclosure.

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

**The** term "three-dimensional network structure" as used herein is a structure that includes a three-dimensional frame and an internal space formed by the frame, wherein the frame may include a polymer chain that includes a crosslinking bond formed by the crosslinkable functional groups, e.g., a crosslinking bond between crosslinkable functional groups and/or a crosslinking bond between crosslinkable functional groups and a crosslinking agent. **The** three-dimensional network structure may also be referred to as a crosslinked structure.

Meanwhile, conventionally, in order to improve the ionic conductivity of the solid electrolyte, a composite solid electrolyte was prepared by mixing a polymer matrix with a ceramic compound such as an oxide, however, such a composite solid electrolyte has a problem that ionic conductivity is reduced when the oxide-based ceramic particles in the polymer matrix are unevenly distributed, or a highly crystalline polymer such as polyethylene oxide is used as the polymer.

**Thus,** the present inventors have prepared a polymer in which a **PEO** (polyethylene oxide)-based copolymer modified with a crosslinkable functional group is crosslinked, in which the PEO-based copolymer and the ceramic compound were mixed, and then crosslinking was induced during the coating and drying process to prepare a composite solid electrolyte containing a polymer in which the ceramic compound was uniformly dispersed between polymer chains.

As a result, the present inventors confirmed that it was possible to provide a composite solid electrolyte exhibiting improved mechanical properties and ionic conductivity compared to existing composite solid electrolytes, and completed the invention.

Next, the composite solid electrolyte of one embodiment will be described in detail.

**<u>Composite solid electrolyte</u>**

A composite solid electrolyte according to one embodiment of the present disclosure comprises:
a polymer containing a PEO(polyethylene oxide)-based copolymer containing a crosslinkable functional group; and a ceramic compound, wherein at least a part of the crosslinkable functional group forms a crosslinking bond with each other, so that the polymer forms a three-dimensional network structure, and wherein the ceramic compound is contained in the three-dimensional network structure.

Such a composite solid electrolyte may include a three-dimensional network structure due to a crosslinked structure of polymers. The three-dimensional network structure is a structure that includes a three-dimensional frame and an internal space between the frames, wherein the frame may include a polymer chain including a crosslinking bond formed by the crosslinkable functional group, and may include a ceramic compound in the internal space.

The crosslinking bond formed by the crosslinkable functional groups forming the frame may include a crosslinking bond between the crosslinkable functional groups and/or a crosslinking bond between the crosslinkable functional groups and the crosslinking agent. When the composite solid electrolyte further includes a crosslinking agent, at least a part of the crosslinkable functional groups may form a crosslinking bond with each other through the crosslinking agent.

The ceramic compound is included in a dispersed form in the internal space of the three-dimensional network structure, thereby enabling uniform dispersion of the ceramic compound. Due to the morphological characteristics in which the ceramic compound is uniformly dispersed, the mechanical strength and ionic conductivity of the composite solid electrolyte can be further improved.

In other words, a part of the polymer chains forming a crosslinking bond can function as plasticizers to ensure flexibility, thereby reducing crystallinity, which has been a chronic problem with PEO. In addition, a part of the polymer chains forming a crosslinking bond functions as a crosslinking agent, so that the ceramic compound can be more uniformly dispersed through the formation of a three-dimensional network.

Meanwhile, in the PEO-based copolymer, the crosslinkable functional group included in the PEO-based copolymer may be directly bonded to the main chain of the PEO-based copolymer, but may be bonded via an alkylene linker or alkylene oxide linker. Thus, the crosslinkable functional group may be bonded via an alkylene linker or alkylene oxide linker having 0 to 10 carbon atoms (provided that an alkylene linker having 0 carbon atoms represents a single bond), and may be at least one selected from the group consisting of a hydroxyl group, a carboxyl group, an isocyanate group, a nitro group, a cyano group, an amine group, an amide group, an epoxy group and an allyl group.

**In** one embodiment of the disclosure, the crosslinkable functional group may be composed of two or more types. **The** crosslinkable functional groups may be the same or different from each other, and preferably may be different. When the crosslinkable functional groups are different, multiple types of repeating units each containing these functional groups may be included. Further, when multiple types of crosslinkable functional groups are included, it may become easier to control the mobility and ionic conductivity of the polymer chain.

The crosslinkable functional group refers to a functional group capable of forming a crosslinking bond between crosslinkable functional groups and/or a crosslinking bond with each other through a crosslinking agent, and can be bonded to the main chain of the polymer chain in the form of a side chain.

In a more specific example, the PEO-based copolymer containing a crosslinkable functional group may be a copolymer containing repeating units of the following Chemical Formulas 1 to 3:

[Chemical Formula 1]

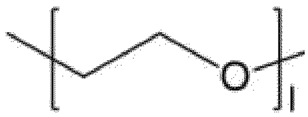

[Chemical Formula 2]

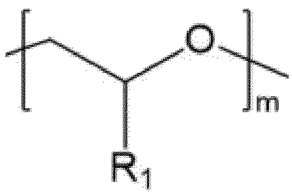

[Chemical Formula 3]

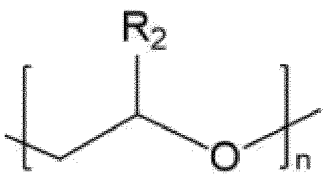

wherein, in Chemical Formulas 1 to 3, $R_1$ represents $-CH_2-O-(CH_2-CH_2-O)_k-R_3$, where k is 0 to 20, and $R_3$ represents

an alkyl group having 1 to 5 carbon atoms,
$R_2$ represents a substituent in which one or more crosslinkable functional groups selected from the group consisting of a hydroxyl group, a carboxyl group, an isocyanate group, a nitro group, a cyano group, an amine group, an amide group, an epoxy group and an allyl group are bonded to a polymer chain via an alkylene linker or alkylene oxide linker having 0 to 10 carbon atoms (provided that an alkylene linker having 0 carbon atoms represents a single bond), and
l, m and n are the number of repetitions of the repeating unit, wherein l and n are each independently an integer of 1 to 1000, and m is an integer of 0 to 1000.

For example, the crosslinkable functional group of $R_2$ can form a polymer having a matrix form of a three-dimensional network structure formed by the crosslinking bond. By forming a three-dimensional network structure by the crosslinking bond, the mechanical properties of the polymer solid electrolyte can be improved, and a ceramic compound may be uniformly dispersed within such a three-dimensional network structure to provide a composite solid electrolyte of one embodiment having more improved ionic conductivity.

Further, it is obvious that the PEO-based copolymer may include two or more types of repeating units of Chemical Formula 3 in which the $R_2$ is crosslinkable functional groups different from each other, and may also include one or more types of repeating units of Chemical Formula 2.

When l, m and n are each less than 1, it is difficult to form a polymer because the molecular weight is small, and when l, m and n are each more than 1000, the solubility during preparation of a mixed solution decreases due to an increase in viscosity, and molding for preparing a solid electrolyte may become difficult. In particular, when the number of repetitions of the repeating unit containing the crosslinkable functional group among l, m, and n is more than 1000, the degree of crosslinking is excessively increased, the mobility of the polymer chain may decrease and the ionic conductivity of the solid electrolyte may decrease.

As used herein, "hydroxy group" refers to -OH group.

As used herein, "carboxyl group" refers to -COOH group.

As used herein, "isocyanate group" refers to -N=C=O group.

As used herein, "nitro group" refers to $-NO_2$ group.

As used herein, "cyano group" refers to -CN group.

As used herein, "amide group" refers to -C(=O)N R'R", wherein R' and R" may each independently be hydrogen or a C1 to C5 alkyl group, or R' and R" together with the N atom to which they are attached may form a heterocycle having C4 to C8 atoms in the ring structure.

As used herein, "amine group" may be selected from the group consisting of a monoalkylamine group; a monoarylamine group; a monoheteroarylamine group; a dialkylamine group; a diarylamine group; a diheteroarylamine group; an alkylarylamine group; an alkylheteroarylamine group; and an arylheteroarylamine group, and the carbon number thereof is not particularly limited, but is preferably 1 to 30. Specific examples of the amine group include a methylamine group, a dimethylamine group, an ethylamine group, a diethylamine group, a phenylamine group, a naphthylamine group, a biphenylamine group, a dibiphenylamine group, an anthracenyl amine group, a 9-methyl-anthracenylamine group, a diphenylamine group, a phenylnaphthylamine group, a ditolylamine group, a phenyltolylamine group, a triphenylamine group, a biphenylnaphthylamine group, a phenylbiphenyl amine group, a biphenylfluorenylamine group, a phenyltriphenylenylamine group, a biphenyltriphenylenylamine group, and the like, but are not limited thereto. Further, "amino group" refers to $-NH_2$.

As used herein, "allyl group" refers to $-CH_2-CH=CH_2$ group.

The weight average molecular weight (Mw) of the copolymer containing Chemical Formulas 1 to 3 may be 100,000 g/mol to 2,000,000 g/mol, and specifically, it may be 100,000 g/mol or more, 200,000 g/mol or more, or 300,000 g/mol or more, and 1,600,000 g/mol or less, 1,800,000 g/mol or less, or 2,000,000 g/mol or less. If the weight average molecular weight (Mw) of the copolymer is less than 100,000 g/mol, the mechanical properties of the solid electrolyte to be prepared may not be satisfied. If the weight average molecular weight (Mw) of the copolymer is more than 2,000,000 g/mol, the solubility during preparation of the mixed solution decreases due to an increase in viscosity, and molding for preparing the solid electrolyte may become difficult. Further, the ionic conductivity of the composite solid electrolyte may decrease due to an increase in crystallinity and a decrease in chain mobility inside the solid electrolyte.

In particular, when the number of repetitions of the repeating unit of Chemical Formula 3 containing a crosslinkable functional group among l, m, and n is more than 1000, the degree of crosslinking increases excessively, and the mobility of polymer chains decreases, which may lead to a decrease in the ionic conductivity of the solid electrolyte.

Further, the copolymer may be a random copolymer or a block copolymer.

In an embodiment of the disclosure, the composite solid electrolyte may include a crosslinking bond between crosslinkable functional groups. In addition, the composite solid electrolyte may further include a crosslinking agent, so that at least a part of the crosslinkable functional groups can form a crosslinking bond with each other via the crosslinking agent. As a result, it may further include a crosslinking bond between the crosslinking agent and the crosslinkable functional group.

The crosslinking bond between crosslinkable functional groups may be a urethane crosslinked bond, an ester crosslinked bond, a hydrogen bond, a bond formed from a radical polymerization reaction by a vinyl group at the end of an allyl group ($-CH_2-CH=CH_2$), and the like, but is not limited to these examples.

Further, when a crosslinking agent is added in the preparation process of the composite solid electrolyte, a crosslinking bond between the crosslinking agent and the crosslinkable functional group may be formed. The crosslinking bond may be a hydrogen bond, a bond formed by a Lewis acid-base interaction, an ionic bond, a coordination bond, or a bond formed by radical polymerization.

The crosslinking agent is not particularly limited as long as it is a polyfunctional crosslinking agent that can form a crosslinking bond with the crosslinkable functional group. For example, the crosslinking agent may be one or more multifunctional crosslinking agents, for example, a bifunctional or higher polyvalent compound, selected from the group consisting of trimethylolpropane trimethacrylate, poly(ethylene glycol) diacrylate, poly(ethylene glycol) dimethacrylate, ethylene glycol dimethylacrylate (hereinafter referred to as "EGDMA"), 1,3-diisopropenylbenzene(DIP), 1,4-diacryloyl piperazine, 2-(diethylamino)ethyl methacrylate, 2,6-bisacryloylamidopyridine, 3-(acryloyloxy)-2-hydroxypropyl methacrylate, 3,5-bis(acryloylamido)benzoic acid, 3-aminopropyltriethoxysilane, 3-isocyanatopropyltriethoxysilane, 3-methylacryloxypropyl trimethoxysilane, bis-(1-(tert-butylperoxy)-1-methylethyl)-benzene, dicumyl peroxide, dimethacrylate, divinylbenzene, ethylene glycol maleic rosinate acrylate, glycidylmethacrylate, hydroxyquinoline, i-phenyldiethoxysilane, maleic rosin glycol acrylate, methylene bisacrylamide, N,N'-1,4-phenylenediacrylamine, N,O-bisacryloyl-phenylalaninol, N,O-bismethacryloyl ethanolamine, pentaerythritol triacrylate, phenyltrimethoxy silane, tetramethoxysilane, tetramethylene, tetraethoxysilane, and triallyl isocyanurate.

Further, the crosslinking agent may be included in an amount of 1 to 30 parts by weight based on 100 parts by weight of the PEO-based copolymer containing a crosslinkable functional group. If the content of the crosslinking agent is less than 1 part by weight, crosslinking with the crosslinkable functional group may not be sufficiently achieved, and if the content of the crosslinking agent is more than 30 parts by weight, excessive crosslinking may occur and the mobility of the polymer chain decreases, which may lead to a decrease in ionic conductivity.

In one embodiment of the disclosure, the composite solid electrolyte may further include lithium salt. The lithium salt is contained in a dissociated ionic state in the internal space between the polymer chains, and thus, can improve the ionic conductivity of the composite solid electrolyte. At least a part of the cations and/or anions dissociated from the lithium salt exist in a state bonded to the polymer chain, and may exhibit mobility during charge/discharge of the battery.

The lithium salt may include at least one selected from the group consisting of $(CF_3SO_2)_2NLi$(lithium bis(trifluoromethanesulphonyl)imide, LiTFSI), $(FSO_2)_2NLi$(lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, $LiC(CF_3SO_2)_3$, lithium chloroborane, lithium lower aliphatic carboxylate and lithium tetraphenyl borate.

Further, the lithium salt may be included in an amount of 25 to 45 parts by weight based on 100 parts by weight of the PEO-based copolymer containing the crosslinkable functional group. Specifically, it may be included in an amount of 25 parts by weight or more, 30 parts by weight or more, or 35 parts by weight or more, or 40 parts by weight or less, or 45 parts by weight or less. **If** the content of the lithium salt is less than 25 parts by weight, the ionic conductivity of the composite solid electrolyte may decrease, and if the content of the lithium salt exceeds 45 parts by weight, the mechanical strength may decrease.

**In** one embodiment of the disclosure, the composite solid electrolyte may include a ceramic compound. **The** ceramic compound has a lithium ion transfer ability to improve the conductivity of lithium ions, and preferably contains lithium atoms but does not store lithium, and has the function of transporting lithium ions, and can improve the ionic conductivity of the composite solid electrolyte.

Further, the ceramic compound may be included in a uniformly dispersed state between crosslinked polymer chains, for example, within the three-dimensional network structure. **The** ceramic compound is added together in the crosslinking process, and can be uniformly dispersed without aggregation between the polymer chains formed by crosslinking. Such ceramic compounds can be advantageous in improving the mechanical strength and ionic conductivity of the composite solid electrolyte due to its uniform dispersion form.

Further, the ceramic compound may be in the form of particles. Due to the morphological characteristics of particles, they can be contained in a more uniformly dispersed state within the composite solid electrolyte. **The** particles of the ceramic compound may be spherical, and its diameter may be 100 nm to 1000 nm. If the diameter is less than 100 nm, the effect of non-crystallization due to the decrease in crystallinity of the polymer may be slight, and if the diameter is more than 1000 nm, dispersibility may decrease due to an increase of aggregation between particles, which may make it difficult to disperse uniformly.

The ceramic compound may be an oxide-based or phosphate-based compound, for example, an oxide-based solid electrolyte in the form of lithium metal oxide or lithium metal phosphate. More specifically, the ceramic compound may be at least one selected from the group consisting of garnet-type lithium-lanthanum-zirconium oxide(LLZO, $Li_7La_3Zr_2O_{12}$)-based compound, perovskite-type lithium-lanthanum-titanium oxide(LLTO, $Li_3xLa_{2/3-x}TiO_3$)-based compound, phosphate-based NASICON type lithium-aluminum-titanium phosphate(LATP, $Li_{1+x}Al_xTi_{2-x}(PO_4)_3$)-baSed compound,

lithium-aluminum-germanium phosphate(LAGP, $Li_{1.5}Al_{0.5}Ge_{1.5}(PO_4)_3$)-based compound, lithium-silicon-titanium phosphate(LSTP, $LiSiO_2TiO_2(PO_4)_3$)-based compound, and lithium-lanthanum-zirconium-titanium oxide (LLZTO)-based compound. More preferably, at least one oxide-based solid electrolyte selected from the group consisting of lithium-lanthanum-zirconium oxide(LLZO), lithium-silicon-titanium phosphate(LSTP), lithium-lanthanum-titanium oxide(LLTO), lithium-aluminum-titanium phosphate(LATP), lithium-aluminum-germanium phosphate(LAGP), and lithium-lanthanum-zirconium-titanium oxide(LLZTO) may be used.

The oxide-based or phosphate-based oxide-based solid electrolyte generally has an ionic conductivity value of up to $10^{-4}$~ $10^{-3}$ S/cm at room temperature, and has the advantage of being stable in a high voltage region, being stable in air, and thus being easy to synthesize and handle.

Further, the ceramic compound does not easily cause combustion or ignition phenomenon even under high temperature conditions of 400°C or more, and thus is high in high-temperature stability. Therefore, when the composite solid electrolyte contains a ceramic compound, not only the mechanical strength but also the high temperature stability and ionic conductivity of the composite solid electrolyte can be improved.

**The** ceramic compound may be included in an amount of 10 parts by weight to 100 parts by weight, or 10 parts by weight to 60 parts by weight, based on 100 parts by weight of the PEO-based copolymer containing a crosslinkable functional group.

**If** the ceramic compound is included in an excessively small amount, the effect of lowering the crystallinity of the polymer and making it amorphous due to the ceramic compound is reduced, so that the effect of increasing the ionic conductivity of the composite solid electrolyte is not significant, and the mechanical properties may also not meet the expected level due to the formation of the composite.

**If** the ceramic compound is included in an excessively large amount, the ceramic compound is not uniformly dispersed within the polymer, and a phenomenon occurs where the ceramic compound particles clump and aggregate with each other, so that a composite solid electrolyte with reduced ionic conductivity can be prepared.

## Method for preparing composite solid electrolyte

A method for preparing the composite solid electrolyte according to the other embodiment of the disclosure may comprise the steps of: forming a mixture of a polyethylene oxide(PEO)-based copolymer containing a crosslinkable functional group and a ceramic compound; and subjecting the PEO-based copolymer contained in the mixture to crosslinking reaction.

In such a preparation method, the PEO-based copolymer containing the crosslinkable functional group has already been described above, and therefore further description thereof will be omitted.

In one embodiment of the disclosure, the crosslinking reaction step may be performed in the presence of at least one additive of a crosslinker and an initiator.

Further, a lithium salt may be added together in the mixing step or the crosslinking reaction step.

Further, the ceramic compound can be the same as that used in the composite solid electrolyte mentioned above, and the content thereof can also be used similarly.

The crosslinking bond may be formed in the process of coating a mixed solution containing the PEO-based copolymer onto a substrate to form a coating film, and then drying the coating film.

Specifically, the mixed solution can be prepared by mixing the PEO-based copolymer in a solvent, and additionally, the solution can be prepared by mixing and dissolving a crosslinking agent, an initiator, and/or a lithium salt together.

The solvent is not particularly limited as long as it is a solvent that can be mixed and dissolved with the PEO-based copolymer, the crosslinking agent, the initiator and/or the lithium salt, and can be easily removed by a drying process. For example, the solvent may be acetonitrile, methanol, ethanol, tetrahydrofuran, water, isopropyl alcohol, dimethyl sulfoxide(DMSO), N-methyl-2-pyrrolidone(NMP), N,N-dimethyl formamide(DMF) or the like.

The concentration of the mixed solution can be appropriately adjusted in consideration of the extent to which the molding process for preparing the composite solid electrolyte can proceed smoothly. Specifically, the concentration of the mixed solution may mean the concentration (w/w%) of the PEO-based copolymer within the mixed solution. The concentration of the mixed solution may be 5% by weight to 20% by weight, and specifically, it may be 5% by weight or more, 7% by weight or more, or 9% by weight or more, and 13% by weight or less, 17% by weight or less, or 20% by weight or less. If the concentration of the mixed solution is less than 5% by weight, the concentration may be too diluted, and the mechanical strength of the composite solid electrolyte may decrease, or it may flow down when coated onto a substrate. If the concentration of the mixed solution is more than 20% by weight, it will be difficult to dissolve the lithium salt at the desired concentration in the mixed solution, the viscosity is high and thus, the solubility may be reduced, or it may be difficult to coat it in the form of a uniform thin film.

**The** substrate is not particularly limited as long as it can function as a support for the coating film. For example, the substrate may be SUS (stainless use steel), polyethylene terephthalate film, polytetrafluoroethylene film, polyethylene

film, polypropylene film, polybutene film, polybutadiene film, vinyl chloride copolymer film, polyurethane film, ethylene-vinylacetate film, ethylenepropylene copolymer film, ethylene-ethyl acrylate copolymer film, ethylene-methyl acrylate copolymer film or polyimide film.

Further, the coating method is not particularly limited as long as it can form a coating film by coating the mixed solution onto the substrate. For example, the coating method may be bar coating, roll coating, spin coating, slit coating, die coating, blade coating, comma coating, slot die coating, lip coating, spray coating or solution casting.

**The** coating film formed on the substrate by the coating method as described above can be molded into a solid electrolyte film in which residual solvent is completely removed through a drying process. **The** drying can be performed separately into a primary drying process and a secondary drying process in order to prevent shrinkage of the film due to rapid evaporation of the solvent. **The** first drying process can remove part of the solvent through room temperature drying, and the secondary drying process can completely remove the solvent through vacuum high-temperature drying. **The** high-temperature drying may be performed at a temperature of 80°C to 130°C. **If** the high-temperature drying temperature is less than 80°C, the residual solvent cannot be completely removed, and if the high-temperature drying temperature is more than 130°C, the film shrinks which makes it difficult to form uniform electrolyte membranes.

Further, the crosslinking agent may form a bond with the crosslinkable functional group. **The** details of the type of the crosslinking agent, the content of the crosslinking agent, and the type of bond with the crosslinkable functional group are the same as described above.

Further, the initiator may induce a radical polymerization reaction between the crosslinkable functional groups to form a crosslinking bond between the crosslinkable functional groups. The functional group that enables radical polymerization reaction may be a functional group containing vinyl at the end, for example, an allyl group.

The initiator is not particularly limited as long as it is an initiator that can induce a radical polymerization reaction between the crosslinkable functional groups. For example, the initiator may include at least one selected from the group consisting of benzoyl peroxide, azobisisobutyronitrile, lauroyl peroxide, cumene hydroperoxide, diisopropylphenyl-hydroperoxide, tert-butyl hydroperoxide, p-methane hydroperoxide and 2,2'-azobis(2-methylpropionitrile).

The initiator may be used in an amount of 0.5 to 2 parts by weight based on 100 parts by weight of the PEO-based copolymer containing a crosslinkable functional group. When the initiator is used within the above range, it can make it possible to induce a radical polymerization reaction between crosslinkable functional groups and efficiently form a crosslinking bond.

Further, the details of the content and type of the lithium salt is the same as described above.

Through the above-mentioned preparation method, a composite solid electrolyte of one embodiment in which a ceramic compound is uniformly dispersed between crosslinked polymer chains can be prepared.

## All-solid-state battery

A further embodiment of the disclosure also relates to an all-solid-state battery comprising the above composite solid electrolyte, wherein the all-solid-state battery includes a negative electrode, a positive electrode, and a composite solid electrolyte interposed between the negative electrode and the positive electrode, and the composite solid electrolyte is prepared according to the above-mentioned one embodiment.

Specifically, the composite solid electrolyte includes a polymer in which a PEO (polyethylene oxide)-based copolymer containing a crosslinkable functional group is crosslinked and a ceramic compound, and the ceramic compound is uniformly dispersed within the three-dimensional network structure of the polymer, thereby improving the ionic conductivity, which can be suitable as an electrolyte for an all-solid-state battery.

Meanwhile, the positive electrode included in the all-solid-state battery includes a positive electrode active material layer, wherein the positive electrode active material layer may be formed on one surface of the positive electrode current collector.

The positive electrode active material layer includes a positive electrode active material, a binder, and a conductive material.

Further, the positive electrode active material is not particularly limited as long as it is a material capable of reversibly absorbing and desorbing lithium ions, and examples thereof may be a layered compound, such as lithium cobalt oxide, lithium nickel oxide, $Li[NixCoyMnzMv]O_2$ (where M is any one selected from the group consisting of Al, Ga, and In, or two or more elements thereof; and $0.3 \le x < 1.0$, $0 \le y$, $z \le 0.5$, $0 \le v \le 0.1$, and $x+y+z+v=1$), $Li(LiaMb\text{-}a\text{-}b'M'b')O_{2\text{-}c}A_c$ (where $0 \le a \le 0.2$, $0.6 \le b \le 1$, $0 \le b' \le 0.2$, and $0 \le c \le 0.2$; M includes Mn and at least one selected from the group consisting of Ni, Co, Fe, Cr, V, Cu, Zn, and Ti; M' is at least one selected from the group consisting of Al, Mg, and B; and A is at least one selected from the group consisting of P, F, S, and N), or a compound substituted with at least one transition metal; lithium manganese oxides such as the chemical formula $Li_{1+y}Mn_{2\text{-}y}O_4$ (where y ranges from 0 to 0.33), $LiMnO_3$, $LiMn_2O_3$, and $LiMnO_2$; lithium copper oxide ($Li_2CuO_2$); vanadium oxides such as $LiV_3O_8$, $LiFe_3O_4$, $V_2O_5$, and $Cu_2V_2O_7$; Ni-site type lithium nickel oxide expressed by the chemical formula $LiNi_{1\text{-}y}MyO_2$ (where M is Co, Mn, Al, Cu, Fe, Mg, B, or Ga, and y ranges from 0.01 to 0.3); lithium manganese complex oxide expressed by the chemical formula $LiMn_{2\text{-}y}M_yO_2$ (where M is Co, Ni, Fe, Cr, Zn, or

Ta, and y ranges from 0.01 to 0.1) or $Li_2Mn_3MO_8$ (where M is Fe, Co, Ni, Cu, or Zn); $LiMn_2O_4$ having a part of Li being substituted with alkaline earth metal ions; a disulfide compound; and a complex oxide formed of $Fe_2(MoO_4)_3$, but are not limited thereto.

Further, the positive electrode active material may be included in an amount of 40 to 80% by weight based on the total weight of the positive electrode active material layer. Specifically, the content of the positive electrode active material may be 40% by weight or more or 50% by weight or more, and 70% by weight or less or 80% by weight or less. If the content of the positive electrode active material is less than 40% by weight, the connectivity and electrical properties between positive electrode active materials may be insufficient, and if the content of the positive electrode active material is more than 80% by weight, the mass transfer resistance may increase.

The binder is a component assisting in binding between the positive electrode active material and the conductive material, and in binding with the current collector. The binder may include at least one selected from the group consisting of styrene-butadiene rubber, acrylic styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepicchlorohydrin, polyphosphazene,polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride and poly(vinylidene fluoride)-hexafluoropropene. Preferably, the binder may include at least one selected from the group consisting of styrene-butadiene rubber, polytetrafluoroethylene, carboxymethylcellulose, polyacrylic acid, lithium polyacrylate and polyvinylidene fluoride.

Further, the binder may be included in an amount of 1% by weight to 30% by weight based on the total weight of the positive electrode active material layer. Specifically, the content of the binder may be 1% by weight or more or 3% by weight or more, and 15% by weight or less or 30% by weight or less. If the content of the binder is less than 1% by weight, the adhesion between the positive electrode active material and the positive electrode current collector may decrease, and if the content of the binder is more than 30% by weight, the adhesion is improved, but the content of the positive electrode active material is reduced accordingly, which may lower battery capacity.

Further, the conductive material is not particularly limited as long as it does not cause side reactions in the internal environment of the all-solid-state battery and does not cause chemical changes in the battery but has excellent electrical conductivity. The conductive material may typically be graphite or electrically conductive carbon, and may be, for example, but is not limited to, one selected from the group consisting of graphite such as natural graphite or artificial graphite; carbon black such as carbon black, acetylene black, Ketjen black, Denka black, thermal black, channel black, furnace black, lamp black, and summer black; carbon-based materials whose crystal structure is graphene or graphite; electrically conductive fibers such as carbon fibers and metal fibers; carbon fluoride; metal powders such as aluminum and nickel powder; electrically conductive whiskers such as zinc oxide and potassium titanate; electrically conductive oxides such as titanium oxide; electrically conductive polymers such as polyphenylene derivatives; and a mixture of two or more thereof.

The conductive material may typically be included in an amount of 0.5% to 30% by weight based on the total weight of the positive electrode active material layer. Specifically, the content of the conductive material may be 0.5% by weight or more or 1% by weight or more, and 20% by weight or less, or 30% by weight or less. If the content of the conductive material is too low, that is, less than 0.5% by weight, it is difficult to obtain an effect on the improvement of the electrical conductivity, or the electrochemical characteristics of the battery may be deteriorated. If the content of the conductive material too high, that is, more than 30% by weight, the amount of positive electrode active material is relatively small and thus capacity and energy density may be lowered. The method of incorporating the conductive material into the positive electrode is not particularly limited, and conventional methods known in the related art such as coating on the positive electrode active material can be used.

Further, the positive electrode current collector supports the positive electrode active material layer and plays the role of transmitting electrons between the external conductor wire and the positive electrode active material layer.

The positive electrode current collector is not particularly limited so long as it does not cause chemical changes in the all-solid-state battery and has high conductivity. For example, the positive electrode current collector may be made of copper, stainless steel, aluminum, nickel, titanium, palladium, fired carbon, copper or stainless steel that is surface-treated with one of carbon, nickel, titanium, silver, or the like, an aluminum-cadmium alloy, or the like.

The positive electrode current collector may have a fine protrusion and depression structure on its surface or may adopt a three-dimensional porous structure in order to improve bonding strength with the positive electrode active material layer. Thereby, the positive electrode current collector may be used in any of various forms including a film, a sheet, a foil, a mesh, a net, a porous body, a foaming body, and a non-woven fabric structure.

The positive electrode as described above can be prepared according to conventional methods. Specifically, the positive electrode can be prepared by a process in which a composition for forming a positive electrode active material

layer, which is prepared by mixing a positive electrode active material, a conductive material, and a binder in an organic solvent, is coated and dried on a positive electrode current collector, and optionally, compression molding is performed on the current collector to improve the electrode density. At this time, as the organic solvent, a solvent that can uniformly disperse the positive electrode active material, binder, and conductive material, and that evaporates easily, is preferably used. Specifically, acetonitrile, methanol, ethanol, tetrahydrofuran, water, isopropyl alcohol, dimethyl sulfoxide(DMSO), N-methyl-2-pyrrolidone(NMP), and the like can be mentioned.

On the other hand, the negative electrode contained in the all-solid-state battery includes a negative electrode active material layer, and the negative electrode active material layer may be formed on one surface of the negative electrode current collector.

**The** negative electrode active material may include a material capable of reversible intercalation and deintercalation of lithium ($Li^+$), a material that can react with lithium ions to reversibly form a lithium-containing compound, lithium metal or lithium alloy.

**The** material capable of reversible intercalation and deintercalation of lithium ion ($Li^+$) may be, for example, a crystalline carbon, an amorphous carbon, or a mixture thereof. **The** material that can react with lithium ions ($Li^+$) to reversibly form a lithium-containing compound may be, for example, tin oxide, titanium nitrate, or silicon. **The** lithium alloy may be, for example, an alloy of lithium (Li) and a metal selected from the group consisting of sodium(Na), potassium(K), rubidium(Rb), cesium(Cs), francium(Fr), beryllium(Be), magnesium(Mg), calcium(Ca), strontium (Sr), barium (Ba), radium(Ra), aluminum (Al) and tin (Sn).

Preferably, the negative electrode active material may be lithium metal, and specifically, may be in the form of a lithium metal thin film or lithium metal powder.

**The** negative electrode active material may be included in an amount of 40 to 80% by weight based on the total weight of the negative electrode active material layer. Specifically, the content of the negative electrode active material may be 40% by weight or more or 50% by weight or more, and 70% by weight or less or 80% by weight or less. **If** the content of the negative electrode active material is less than 40% by weight, the electrical properties may be not sufficient, and if the content of the negative electrode active material is more than 80% by weight, the mass transfer resistance may increase.

Further, the binder is the same as described above for the positive electrode active material layer.

Further, the conductive material is the same as described above for the positive electrode active material layer.

Further, the negative electrode current collector is not particularly limited so long as it does not cause chemical changes in the corresponding battery and has conductivity. For example, the negative electrode current collector may be made of copper, stainless steel, aluminum, nickel, titanium, fired carbon, copper or stainless steel that is surface-treated with one of carbon, nickel, titanium, silver, or the like, an aluminum-cadmium alloy, or the like. Further, similar to the positive electrode current collector, the negative electrode current collector may be used in various forms such as a film, a sheet, a foil, a net, a porous body, a foaming body, and a non-woven fabric structure, which fine protrusions and depressions are formed on a surface thereof.

**The** preparation method of the negative electrode is not particularly limited, and it can be prepared by forming a negative electrode active material layer on a negative electrode current collector using a layer or film forming method commonly used in the art. For example, methods such as compression, coating, and deposition can be used. Further, the negative electrode of the present disclosure also includes a case in which a battery is assembled in a state where a lithium thin film does not exist on the negative electrode current collector, and then a metallic lithium thin film is formed on a metal plate through initial charging.

According to still another embodiment, there are provided a battery module including the all-solid state battery as a unit cell, a battery pack including the battery module, and a device including the battery pack as a power source.

Herein, particular examples of the device may include, but are not limited to: power tools driven by an electric motor; electric cars, including electric vehicles(EV), hybrid electric vehicles(HEV), plug-in hybrid electric vehicles(PHEV), or the like; electric carts, including electric bikes (E-bikes) and electric scooters (E-scooters); electric golf carts; electric power storage systems; or the like.

Preferred examples will be presented hereinafter so that the present disclosure can be understood with ease. However, the following examples are for illustrative purposes only and the scope of the invention is not limited thereto.

## EXAMPLE

### Example 1: Preparation of composite solid electrolyte

Step 1) Preparation of polymer containing copolymer

A polyethylene oxide (PEO)-based copolymer of the following Chemical Formula 1a was prepared:

[Chemical Formula 1a]

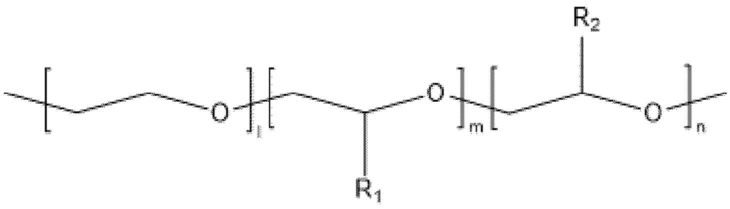

wherein, in Chemical Formula 1a, $R_1$ is $-CH_2-O-(CH_2-CH_2-O)_k-CH_3$, $R_2$ is $-CH_2-O-CH_2-CH=CH_2$, k is 2, the ratio of l : m : n is 85:13:2, and the weight average molecular weight (Mw) of the copolymer is about 2,000,000 g/mol.

The copolymer of Chemical Formula 1a has an allyl group bonded through a methylene oxide linker as a crosslinkable functional group.

The polyethylene oxide copolymer was mixed with acetonitrile as a solvent, trimethylolpropane trimethacrylate as a crosslinking agent, benzoyl peroxide as an initiator, LiTFSI as a lithium salt, and LSTP as a ceramic compound were mixed to prepare a mixed solution of polyethylene oxide copolymer and ceramic compound, which was then stirred using a magnetic bar for 24 hours. At this time, the mixed solution of the polyethylene oxide copolymer and the ceramic compound was composed of 20 parts by weight of trimethylolpropane trimethacrylate as a crosslinking agent, 1 part by weight of benzoyl peroxide as an initiator, 36 parts by weight of LiTFSI as a lithium salt and 40 parts by weight of LSTP as a ceramic compound based on 100 parts by weight of the polyethylene oxide copolymer, wherein, using acetonitrile as a solvent, the concentration of polyethylene oxide copolymer, which is a polymer contained in the mixed solution of the polymer and the ceramic compound, was set to 11.1 wt.%, and the concentration of the polyethylene oxide and the ceramic compound was set to 14.9 wt.%.

The prepared mixed solution was solution-cast on a lower substrate of a coin cell, then primarily dried at room temperature for 12 hours, and then secondarily dried at 100°C for 3 hours to form an electrolyte film with a thickness of 200 $\mu$m. Thereby, a composite solid electrolyte was prepared.

**COMPARATIVE EXAMPLE:**

**Comparative Example 1: Polymer solid electrolyte containing only modified PEO (containing no ceramic compound)**

A polymer solid electrolyte was prepared in the same manner as in Example 1, except that the ceramic compound was not used.

**Comparative Example 2: Composite solid electrolyte containing unmodified PEO and ceramic compound**

A composite solid electrolyte was prepared in the same manner as that prepared in Example 1, except that PEO homopolymer unsubstituted with crosslinkable functional groups (Sigma Aldrich, molecular weight (Mw): 4,000,000 g/mol) was used, and a crosslinking agent or an initiator was not added.

**Comparative Example 3: Polymer solid electrolyte containing unmodified PEO (containing no ceramic compound)**

A polymer solid electrolyte was prepared in the same manner as in Example 1, except that a ceramic compound was not used, a PEO homopolymer in a crosslinkable functional group was not substituted (Sigma Aldrich, molecular weight (Mw): 4,000,000 g/mol) was used, and a crosslinking agent or an initiator was not added. At this time, when preparing the mixed solution, the molar ratio of the PEO-based copolymer and LiTFSI, which is a lithium salt, was set to 20:1, which was added to acetonitrile as a solvent to prepare a mixed solution. The concentration of PEO-based copolymer in the mixed solution was set to 3% (w/w%).

**EXPERIMENTAL EXAMPLE**

**Experimental Example 1: Measurement of ion conductivity of solid electrolyte**

To measure the ionic conductivity of the solid electrolyte prepared in Examples and Comparative Examples, the

solid electrolyte was formed on the lower substrate of a coin cell with a size of 1.7671 $cm^2$, and then a coin cell for measuring the ionic conductivity was fabricated using SUS as a blocking electrode.

Resistance was measured using an electrochemical impedance spectrometer (EIS, VM3, Bio Logic Science Instrument) at 25°C under the conditions of an amplitude of 10 mV and a scan range from 1Hz to 0.1 MHz, and then the ionic conductivity of the solid electrolyte was calculated according to the following Equation 1.

[Equation 1]

$$\sigma_i = \frac{L}{RA}$$

wherein, in Equation 1, $\sigma_i$ is the ionic conductivity (S/cm) of the solid electrolyte, R is the resistance ($\Omega$) of the solid electrolyte measured with the electrochemical impedance spectrometer, L is the thickness ($\mu$m)of the solid electrolyte, and A means the area ($cm^2$) of the solid electrolyte.

Table 1 below shows the calculated ionic conductivity values.

[Table 1]

| | Ionic conductivity (S/cm, @25°C) |
|---|---|
| Example 1 | $1.4 \times 10^{-4}$ |
| Comparativ e Example 1 | $2.3 \times 10^{-5}$ |
| Comparativ e Example 2 | $2.9 \times 10^{-7}$ |
| Comparativ e Example 3 | $4.9 \times 10^{-8}$ |

As shown in Table 1, it was found that Example 1, which is a composite solid electrolyte prepared using a PEO containing a crosslinkable functional group and a ceramic compound, had the highest ionic conductivity.

## Claims

1. A composite solid electrolyte comprising:

   a polymer containing a PEO(polyethylene oxide)-based copolymer containing a crosslinkable functional group; and a ceramic compound,
   wherein at least a part of the crosslinkable functional group forms a crosslinking bond with each other, so that the polymer forms a three-dimensional network structure, and
   wherein the ceramic compound is contained in the three-dimensional network structure.

2. The composite solid electrolyte of claim 1, wherein the composite solid electrolyte further comprises a crosslinking agent.

3. The composite solid electrolyte of claim 2, wherein at least a part of the crosslinkable functional group forms a crosslinking bond with each other through the crosslinking agent.

4. The composite solid electrolyte of claim 1, wherein the crosslinkable functional group is bonded through an alkylene linker or alkylene oxide linker having 0 to 10 carbon atoms, provided that an alkylene linker having 0 carbon atoms represents a single bond, to the PEO-based copolymer, and
   is selected from the group consisting of a hydroxyl group, a carboxyl group, an isocyanate group, a nitro group, a cyano group, an amine group, an amide group, an epoxy group and an allyl group.

5. The composite solid electrolyte of claim 1, further comprising a lithium salt dispersed on the polymer forming the three-dimensional network structure.

6. The composite solid electrolyte of claim 1, wherein the PEO(polyethylene oxide)-based copolymer is a copolymer

comprising repeating units of the following Chemical Formulas 1 to 3:

[Chemical Formula 1]

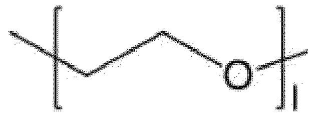

[Chemical Formula 2]

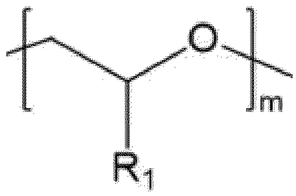

[Chemical Formula 3]

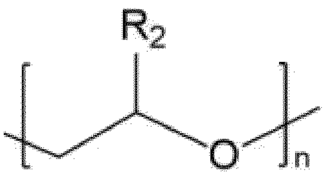

wherein, in Chemical Formulas 1 to 3, $R_1$ represents $-CH_2-O-(CH_2-CH_2-O)_k-R_3$, where k is 0 to 20, and $R_3$ represents an alkyl group having 1 to 5 carbon atoms,

$R_2$ represents a substituent in which one or more crosslinkable functional groups selected from the group consisting of a hydroxyl group, a carboxyl group, an isocyanate group, a nitro group, a cyano group, an amine group, an amide group, an epoxy group and an allyl group are bonded to a polymer chain via an alkylene linker or alkylene oxide linker having 0 to 10 carbon atoms, provided that an alkylene linker having 0 carbon atoms represents a single bond, and

l, m and n are the number of repetitions of the repeating unit, wherein l and n are each independently an integer of 1 to 1000, and m is an integer of 0 to 1000.

**7.** The composite solid electrolyte of claim 1, wherein the ceramic compound includes an oxide-based solid electrolyte selected from lithium metal oxide or lithium metal phosphate.

**8.** The composite solid electrolyte of claim 1, wherein the ceramic compound includes at least one oxide-based solid electrolyte selected from the group consisting of lithium-lanthanum-zirconium oxide(LLZO)-based compound, lithium-silicon-titanium phosphate(LSTP)-based compound, lithium-lanthanum-titanium oxide(LLTO)-based compound, lithium-aluminum-titanium phosphate(LATP)-based compound, lithium-aluminum-germanium phosphate(LAGP)-based compound, and lithium-lanthanum-zirconium-titanium oxide (LLZTO)-based compound.

**9.** A method for preparing the composite solid electrolyte of claim 1, the method comprising the steps of:

forming a mixture of a polyethylene oxide(PEO)-based copolymer containing a crosslinkable functional group and a ceramic compound; and

subjecting the PEO-based copolymer contained in the mixture to crosslinking reaction.

**10. The** method of claim 9, wherein the crosslinking reaction is carried out in the presence of at least one additive selected from the group consisting of a crosslinking agent and an initiator.

**11.** An all-solid-state battery comprising an electrolyte layer containing the composite solid electrolyte of any one of claims 1 to 8.

**INTERNATIONAL SEARCH REPORT**

International application No.
**PCT/KR2023/015794**

**A. CLASSIFICATION OF SUBJECT MATTER**

**H01M 10/056**(2010.01)i; **H01M 10/052**(2010.01)i; **C08G 65/24**(2006.01)i; **C08L 71/02**(2006.01)i; **C08K 3/013**(2018.01)i; **C08K 3/22**(2006.01)i; **C08K 3/32**(2006.01)i; **C08K 3/34**(2006.01)i; **C08J 3/24**(2006.01)i; **C08J 5/22**(2006.01)i

According to International Patent Classification (IPC) or to both national classification and IPC

**B. FIELDS SEARCHED**

Minimum documentation searched (classification system followed by classification symbols)

H01M 10/056(2010.01); H01B 1/06(2006.01); H01M 10/052(2010.01); H01M 10/0525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 복합 고체 전해질(composite solid electrolyte), 가교 결합성 작용기(crosslinkable functional group), 폴리에틸렌 옥사이드계 코폴리머(polyethylene oxide-based copolymer), 세라믹 화합물(ceramic compound), 전고체 전지(all solid state battery)

**C. DOCUMENTS CONSIDERED TO BE RELEVANT**

| Category* | Citation of document, with indication, where appropriate, of the relevant passages | Relevant to claim No. |
|---|---|---|
| X | CN 113273010 A (OSAKA SODA CO., LTD.) 17 August 2021 (2021-08-17)<br>See claims 1-6; and paragraphs [0015]-[0024], [0026], [0035], [0042], [0043], [0051], [0054], [0056], [0065], [0070], [0098]-[0100] and [0105]. | 1-11 |
| X | KR 10-2017-0113417 A (LG CHEM, LTD.) 12 October 2017 (2017-10-12)<br>See claims 1, 7, 9, 10 and 14; paragraphs [0087] and [0102]; and example 1. | 1,5,7-9,11 |
| A | BOYANO, I. et al. Reduction of Grain Boundary Resistance of La0.5Li0.5TiO3 by the Addition of Organic Polymers. Nanomaterials. 2021, vol. 11, no. 1, document no. 61, inner pp. 1-12.<br>See entire document. | 1-11 |
| A | KR 10-2017-0060225 A (KOREA ELECTROTECHNOLOGY RESEARCH INSTITUTE) 01 June 2017 (2017-06-01)<br>See entire document. | 1-11 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 January 2024** | **16 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
**PCT/KR2023/015794**

**C. DOCUMENTS CONSIDERED TO BE RELEVANT**

| Category* | Citation of document, with indication, where appropriate, of the relevant passages | Relevant to claim No. |
|---|---|---|
| A | US 2003-0082457 A1 (NOH, H.-G.) 01 May 2003 (2003-05-01)<br>See entire document. | 1-11 |

Form PCT/ISA/210 (second sheet) (July 2022)

**INTERNATIONAL SEARCH REPORT**
**Information on patent family members**

International application No.
**PCT/KR2023/015794**

| Patent document cited in search report | Publication date (day/month/year) | Patent family member(s) | Publication date (day/month/year) |
|---|---|---|---|
| CN 113273010 A | 17 August 2021 | WO 2020-110994 A1 | 04 June 2020 |
| KR 10-2017-0113417 A | 12 October 2017 | CN 108140883 A | 08 June 2018 |
| | | CN 108140883 B | 29 January 2021 |
| | | EP 3333959 A1 | 13 June 2018 |
| | | EP 3333959 B1 | 29 April 2020 |
| | | KR 10-2018755 B1 | 06 September 2019 |
| | | US 10892519 B2 | 12 January 2021 |
| | | US 2018-0254523 A1 | 06 September 2018 |
| | | WO 2017-171436 A1 | 05 October 2017 |
| KR 10-2017-0060225 A | 01 June 2017 | None | |
| US 2003-0082457 A1 | 01 May 2003 | CN 100375329 C | 12 March 2008 |
| | | CN 100528931 C | 19 August 2009 |
| | | CN 1332486 A | 23 January 2002 |
| | | CN 1341675 A | 27 March 2002 |
| | | JP 2002-025621 A | 25 January 2002 |
| | | JP 2002-025622 A | 25 January 2002 |
| | | JP 4266083 B2 | 20 May 2009 |
| | | JP 4418126 B2 | 17 February 2010 |
| | | KR 10-0337889 B1 | 24 May 2002 |
| | | KR 10-0357960 B1 | 25 October 2002 |
| | | KR 10-2001-0105584 A | 29 November 2001 |
| | | KR 10-2002-0003901 A | 16 January 2002 |
| | | US 2002-0018937 A1 | 14 February 2002 |
| | | US 6632571 B2 | 14 October 2003 |
| | | US 6780544 B2 | 24 August 2004 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- KR 1020220132767
- KR 1020230136065
- JP 6124713 A